# EUROPEAN PATENT SPECIFICATION

(11) **EP 3 536 718 B1**
(45) Date of publication and mention of the grant of the patent: **20.12.2023**
(21) Application number: 17868473.4
(22) Date of filing: 31.10.2017
(51) Int. Cl.: C08F 220/22, C08G 18/80, C09K 3/18, D06M 15/277, C09D 133/16

(54) **FLUORINATED POLYMER AND SURFACE TREATING AGENT COMPOSITION**
FLUORIERTES POLYMER UND OBERFLÄCHENBEHANDLUNGSZUSAMMENSETZUNG
POLYMÈRE FLUORÉ ET COMPOSITION D'AGENT DE TRAITEMENT DE SURFACE

(30) Priority: 01.11.2016 CN 201610933454
(43) Date of publication of application: 11.09.2019
(73) Proprietor: Daikin Industries, Ltd., Osaka-shi, Osaka 530-0001 (JP)
(72) Inventor: MINAMI, Shinichi, Shanghai 200040 (CN); FUKUMORI, Masaki, Osaka-shi Osaka 530-8323 (JP); ENOMOTO, Takashi, Osaka-shi Osaka 530-8323 (JP); YOSHIOKA, Takuya, Shanghai 200040 (CN); YAMAMOTO, Ikuo, Osaka-shi Osaka 530-8323 (JP); ZHOU, Bin, Shanghai 200040 (CN); ZHU, Min, Shanghai 200040 (CN)
(74) Representative: Hoffmann Eitle
(86) International application number: PCT/JP2017/039270
(87) International publication number: WO 2018/084132

(56) References cited:
- EP-A1- 2 656 894
- EP-A2- 0 247 489
- WO-A1-2013/058334
- WO-A1-2013/058334
- WO-A1-2015/080060
- JP-A- S6 399 285
- JP-A- H01 223 104
- JP-A- H06 235 831
- JP-A- 2012 046 674
- JP-A- 2012 130 885

## Description

### TECHNICAL FIELD

The present invention relates to a fluorine-containing polymer and a surface-treating composition such as a water- and oil-repellent composition comprising the same. Specifically, the present invention relates to a water- and oil-repellent composition which can impart excellent water-repellency, oil-repellency, antifouling property to textile products (for example, carpets), paper, nonwoven fabrics, stone materials, electrostatic filters, dust masks and parts of fuel cell.

### BACKGROUND ART

Conventionally, various fluorine-containing compounds have been proposed. The fluorine-containing compound has an advantage that it is excellent in characteristics such as heat resistance, oxidation resistance and weather resistance. A fluorine-containing compound is used, for example, as a water- and oil-repellent agent and a soil resistant agent by utilizing the property that the free energy of the fluorine-containing compound is low, that is, it is difficult to adhere.

The fluorine-containing compounds which can be used as the water- and oil-repellent agent include a fluorine-containing polymer which comprises (meth)acrylate ester having a fluoroalkyl group as a constituent monomer. Various recent research results indicate that in a practical treatment of fibers with the surface-treating agent, the important surface property is not a static contact angle, but is a dynamic contact angle, particularly a reversing contact angle. That is, the advancing contact angle of water is not dependent on the carbon number of the fluoroalkyl side chain, but the reversing contact angle of water in the case of carbon number of at most 7 is remarkably low than that in the case of carbon number of at least 8. In correspondence to this, an X-ray analysis shows that the side chain crystallizes when the carbon number of side chain is at least 7. It is known that the actual water-repellency has relationship with the crystallization of the side chain and that mobility of the surface-treating agent molecules is an important factor for expression of the actual performances (for example, T. Maekawa, Fine Chemical, 23(6), 12 (1994)). Accordingly, it has been believed that the acrylate polymer having low carbon number of fluoroalkyl group in the side chain which is at most 7 (particularly 6) has low crystallinity so that the polymer cannot satisfy the actual performances (particularly water-repellency). Further, since there are many treatments using auxiliaries such as a softening agent and an antistatic agent in the water- and oil-repellency treatment, there is a problem that practical performance is not satisfied when these agents are used in combination.

JP-A-2013-151651 discloses a fluorine-containing composition comprising a fluorine-containing polymer having repeating units derived from (A) a fluorine-containing monomer which is an α-chloroacrylate having a fluoroalkyl group, (B) a monomer having a linear or branched hydrocarbon group, which has no fluoroalkyl group and (C) a monomer having a cyclic hydrocarbon group, which has no fluoroalkyl group. However, washing durability has not been adequately studied. In addition, JP-A-2010-534740 discloses a plurality of types of fluorine-containing monomers, but combinations of fluorine-containing monomers are not specifically described or studied.

EP-A-0 247 489 discloses a water- and oil-repellent composition comprising a polymer comprising ≥ 10 mole % of a fluoroacrylate of the formula CH2=CF-C(=O)O-Y-Rf is wherein Y is C₁₋₃-alkylene, -CH₂CH₂N (R) SO₂- wherein R is C₁₋₃-alkyl, or -CH₂CH(OZ)CH₂- wherein Z is H or acetyl, and Rf is C₃₋₂₁-fluoroalkyl optionally having 1-10 non-adjacent oxygen atoms in its carbon chain.

WO 2013/058334 relates to a composition containing a fluorine-containing polymer having a repeating unit derived from a monomer (a1) and a monomer (a2), both of the formula CH₂=C(-X)-C(=O)-Y-Z-Rf wherein X is H, halogen or a univalent organic group; Y is -O- or -NH-; Z is a bond or bivalent organic group; and Rf is C₁₋₆-fluoroalkyl monomer (a1) and is C≥₁₂-fluoroalkyl in monomer (a2).

EP-A-2 656 894 describes an oil repellent waterproof air-permeable filter comprising a substrate having a continuous porous structure and a coating material covering the substrate and containing a fluoropolymer having 40-100 mass% of constituent units based on an α-chloroacrylate having a C₁₋₆-perfluoroalkyl group, based on the total of constituent units.

### SUMMARY OF THE INVENTION

### PROBLEMS TO BE SOLVED BY THE INVENTION

One object of the present invention is to provide a fluorine-containing polymer and a surface-treating composition which can impart excellent washing durability and water- and oil-repellency to fibers.

### MEANS TO SOLVE THE PROBLEMS

The present invention provides a composition (also referred to as "the present composition" hereinafter) which is a surface-treating composition comprising
(1) a fluorine-containing polymer having a repeating unit derived from a fluorine-containing monomer (a) and a repeating unit derived from a fluorine-free non-crosslinkable monomer (b),
   the fluorine-containing monomer (a) comprises
      - a first monomer (a1) of the formula:

         CH₂=C(-Cl)-C(=O)-Y¹-Z¹-Rf¹

         wherein
         - Y¹: is -O- or -NH-,
         - Z¹: is a direct bond or a divalent organic group, and
         - Rf¹: is C₁₋₆-perfluoroalkyl, and
      - a second monomer (a2) of the formula:

         CH2=C(-X²)-C(=O)-Y²-Z²-Rf²

         wherein
         - X²: is H or a monovalent organic group,
         - Y²: is -O- or -NH-,
         - Z²: is a direct bond or a divalent organic group, and
         - Rf²: is C₁₋₆-perfluoroalkyl,
   wherein the weight ratio (a1):(a2) of the monomers (a1) and (a2) is 20:80 to 75:25; and
   the fluorine-free non-crosslinkable monomer (b) comprises a monomer (b1) of the formula CH₂=CA-T wherein A is H, methyl or halogen other than F, and T is H, halogen other than F, a chain or cyclic C₁₋₃₀- hydrocarbon group, or a chain or cyclic C₁₋₃₀-organic group having an ester bond;
(2) a liquid aqueous medium; and
(3) a surfactant.

Also, the present invention provides (i) a method for producing a treated textile product, comprising applying the present composition to a textile product and (ii) a treated textile product obtained by treating with the present composition.

Preferred embodiments of the invention are as defined in the appended dependent claims and/or in the following detailed description.

### EFFECT OF THE INVENTION

According to the present invention, excellent water-repellency, oil-repellency, antifouling property and soil release property, for example, excellent durability of water- and oil-repellency can be obtained.

The present composition can be used as a water- and oil-repellent composition, a soil resistant composition and/or a soil release composition.

The present composition can impart good water-repellency, oil-repellency, antifouling property and soil releasability to a substrate to be treated even when the heat treatment temperature of the treated substrate is low.

### MODE FOR CARRYING OUT THE INVENTION

The surface-treating composition comprises:
(1) a fluorine-containing polymer,
(2) a liquid medium, and
(3) a surfactant.
   The surface-treating composition may further comprise:
(4) a curing agent.
   The surface-treating composition may further comprise:
(5) another component.

### (1) Fluorine-containing polymer

The fluorine-containing polymer has a repeating unit derived from a monomer comprising a fluorine-containing monomer (a) and a repeating unit derived from a fluorine-free non-crosslinkable monomer (b).

### (a) Fluorine-containing monomer

The fluorine-containing monomer (a) comprises a combination of a first monomer (a1) having a fluoroalkyl group and an acryloyl group having a halogen group at an α-position and a second monomer (a2) having a fluoroalkyl group and an acryloyl group having a monovalent organic group or a hydrogen atom at an α-position. It may comprise fluorine-containing monomers other than the monomers (a1) and (a2), but preferably consists of the monomers (a1) and (a2).

### (a1) first fluorine-containing monomer

The first fluorine-containing monomer (a1) is a compound of the formula:

CH₂=C(-Cl)-C(=O)-Y¹-Z¹-Rf¹

wherein
Y¹ is -O- or -NH-,
Z¹ is a direct bond or a divalent organic group, and
Rf¹ is C₁₋₆-perfluoroalkyl.

### Y¹ is preferably -O-.

Examples of Z¹ include a direct bond, a C₁₋₁₀-aliphatic group, a C₆₋₁₈-aromatic group or a C₆₋₁₈-cycloaliphatic group, a group of the formula -R²(R¹)N-SO₂- or -R²(R¹)N-CO- (wherein R¹ is C₁₋₁₀-alkyl and R² is linear or branched C₁₋₁₀-alkylene), a group of the formula -CH₂CH(OR³)CH₂-(Ar-O)ₚ- (wherein R³ is H or C₁₋₁₀-acyl (for example, formyl or acetyl), Ar is arylene optionally having a substituent and p is 0 or 1), a group of the formula -(CH₂)ᵣ-Ar-(O)_{q}- (wherein Ar is an arylene group optionally having a substituent, q is 0 or 1, and r is 0-10) or a group of the formula -(CH₂)ₘ-SO₂-(CH₂)ₙ- or -(CH₂)ₘ-S-(CH₂)ₙ- (wherein m is 1-10 and n is 0-10.). The aliphatic group is preferably alkylene (particularly C₁₋₄-akylene, such as C₁₋₂-alkylene). The aromatic or cycloaliphatic group is optionally substituted. The S group or the SO₂ group may be directly bonded to the Rf¹ group.

In the monomer (a1), Rf¹ is C₁₋₆-perfluoroalkyl, especially C₄₋₆-perfluoroalkyl, more preferably C₆-perfluoroalkyl. Examples of Rf¹ include -CF₃, -CF₂CF₃,-CF₂CF₂CF₃, -CF(CF₃)₂, -CF₂CF₂CF₂CF₃, -CF₂CF(CF₃)₂, -C(CF₃)₃, -(CF₂)₄CF₃, -(CF₂)₂CF(CF₃)₂, -CF₂C(CF₃)₃, -CF(CF₃)CF₂CF₂CF₃, -(CF₂)₅CF₃ and -(CF₂)₃CF(CF₃)₂.

Specific examples of the monomer (a1) include the following:

CH₂=C(-Cl)-C(=O)-O-(CH₂)₂-Rf¹

CH₂=C(-Cl)-C(=O)-O-(CH₂)₂-S-Rf¹

CH₂=C(-Cl)-C(=O)-O-(CH₂)₂-S-(CH₂)₂-Rf¹

CH₂=C(-Cl)-C(=O)-O-(CH₂)₂-SO₂-Rf¹

CH₂=C(-Cl)-C(=O)-O-(CH₂)₂-SO₂-(CH₂)₂-Rf¹

CH₂=C(-Cl)-C(=O)-NH-(CH₂)₂-Rf¹

CH₂=C(-Cl)-C(=O)-O-(CH₂)₃-S-Rf¹

CH₂=C(-Cl)-C(=O)-O-(CH₂)₃-S-(CH₂)₂-Rf¹

CH₂=C(-Cl)-C(=O)-O-(CH₂)₃-SO₂-Rf¹

CH₂=C(-Cl)-C(=O)-O-(CH₂)₃-SO₂-(CH₂)₂-Rf¹

### (a2) Second fluorine-containing monomer

The second fluorine-containing monomer (a2) is a compound of the formula:

CH₂=C(-X²)-C(=O)-Y²-Z²-Rf²

wherein
- X²: is H or a monovalent organic group,
- Y²: is -O- or -NH-,
- Z²: is a direct bond or a divalent organic group, and
- Rf²: is C₁₋₆-perfluoroalkyl.

X² is preferably H or linear or branched C₂₋₂₁-alkyl. Representative examples of X² include methyl and H, and H is particularly preferred.

### Y² is preferably -O-.

Examples of Z² and preferred embodiments thereof include the same as defined for Z¹ in the formula of monomer (a1) above.

In the monomer (a2), Rf² is C₁₋₆-perfluoroalkyl, especially C₄₋₆-perfluoroalkyl, more preferably C₆-perfluoroalkyl. Examples of Rf² include -CF₃, -CF₂CF₃,-CF₂CF₂CF₃, -CF(CF₃)₂, -CF₂CF₂CF₂CF₃, -CF₂CF(CF₃)₂, -C(CF₃)₃, -(CF₂)₄CF₃, -(CF₂)₂CF(CF₃)₂, -CF₂C(CF₃)₃, -CF(CF₃)CF₂CF₂CF₃, -(CF₂)₅CF₃ and -(CF₂)₃CF(CF₃)₂.

Specific examples of the monomer (a2) include the following:

CH₂=C(-H)-C(=O)-O-(CH₂)₂-Rf²

CH₂=C(-H)-C(=O)-O-C₆H₄-Rf²

CH₂=C(-H)-C(=O)-O-(CH₂)₂N(-CH₃) SO₂-Rf²

CH₂=C(-H)-C(=O)-O-(CH₂)₂N(-C₂H₅) SO₂-Rf²

CH₂=C(-H)-C(=O)-O-CH₂CH(-OH) CH₂-Rf²

CH₂=C(-H)-C(=O)-O-CH₂CH(-OCOCH₃) CH₂-Rf²

CH₂=C(-H)-C(=O)-O-(CH₂)₂-S-Rf²

CH₂=C(-H)-C(=O)-O-(CH₂)₂-S-(CH₂)₂-Rf²

CH₂=C(-H)-C(=O)-O-(CH₂)₃-SO₂-Rf²

CH₂=C(-H)-C(=O)-O-(CH₂)₂-SO₂-(CH₂)₂-Rf²

CH₂=C(-H)-C(=O)-NH-(CH₂)₂-Rf²

CH₂=C(-CH₃)-C(=O)-O-(CH₂)₂-Rf²

CH₂=C(-CH₃)-C(=O)-O-C₆H₄-Rf²

CH₂=C(-CH₃)-C(=O)-O-(CH₂)₂N(-CH₃) SO₂-Rf²

CH₂=C(-CH₃)-C(=O)-O-(CH₂)₂N(-C₂H₅) SO₂-Rf²

CH₂=C(-CH₃)-C(=O)-O-CH₂CH(-OH)CH₂-Rf²

CH₂=C(-CH₃)-C(=O)-O-CH₂CH(-OCOCH₃) CH₂-Rf²

CH₂=C(-CH₃)-C(=O)-O-(CH₂)₂-S-Rf²

CH₂=C(-CH₃₎-C(=O)-O-(CH₂₎₂-S-(CH₂)₂-Rf²

CH₂=C(-CH₃₎-C(=O)-O-(CH₂)₃-SO₂-Rf²

CH₂=C(-CH₃)-C(=O)-O-(CH₂)₂-SO₂-(CH₂)₂-Rf²

CH₂=C(-CH₃₎-C(=O)-NH-(CH₂)₂-Rf²

### (b)Fluorine-free monomer

The fluorine-free monomer (b) has no fluorine atom and has at least one ethylenically unsaturated double bond, and comprises a fluorine-free non-crosslinkable monomer (b1).

### (b1) fluorine-free non-crosslinkable monomer

The fluorine-free non-crosslinkable monomer (b1) is a compound of the formula CH₂=CA-T wherein
A is H, methyl or halogen other than F (for example, Cl, Br and I),
T is H, halogen other than F (for example, Cl, Br and I), a chain or cyclic C₁₋₃₀- hydrocarbon group or a chain or cyclic C₁₋₃₀- organic group and having an ester bond.

Examples of the chain or cyclic C₁₋₃₀-hydrocarbon group include a linear or branched, saturated or unsaturated (e.g., ethylenically unsaturated) aliphatic C₁₋₃₀- hydrocarbon group, a saturated or unsaturated (e.g., ethylenically unsaturated) C₄₋₃₀-cycloaliphatic group, an aromatic C₆₋₃₀-hydrocarbon group and an araliphatic C₇₋₃₀-hydrocarbon group.

Examples of the chain or cyclic C₁₋₃₀-organic group and having an ester bond include -C(=O)-O-Q and -O-C(=O)-Q (wherein Q is a linear or branched, saturated or unsaturated (e.g., ethylenically unsaturated) aliphatic C₁₋₂₀-hydrocarbon group, a saturated or unsaturated (e.g., ethylenically unsaturated) C₄₋₂₀-cycloaliphatic group, an aromatic C₆₋₂₀-hydrocarbon group or an araliphatic C₇₋₂₀-hydrocarbon group).

The fluorine-free non-crosslinkable monomer (b1) may include an acrylate ester monomer (b1-1) and a halogenated olefin monomer (b1-2).

Examples of the acrylate ester monomer (b1-1) include:

CH₂=CA²¹-C(=O)-O-A²²

Wherein A²¹ is H, methyl or halogen other than F, and A²² is a C₁₋₃₀-hydrocarbon group. A²¹ is preferably H, methyl or Cl.

A²² may include an acyclic aliphatic C₁₋₃₀-hydrocarbon group, and a cyclic hydrocarbon-containing C₄₋₃₀-group. The number of carbon atoms of the acyclic aliphatic hydrocarbon group is preferably 12-30, more preferably 18-25. Specific examples of the acyclic aliphatic hydrocarbon group are lauryl, cetyl, stearyl and behenyl. Specific examples of the cyclic hydrocarbon group are cyclohexyl, t-butylcyclohexyl, isobornyl, dicyclopentanyl, dicyclopentenyl and adamantyl.

Specific examples of the acrylate ester monomer having an acyclic aliphatic hydrocarbon group include lauryl (meth)acrylate, cetyl (meth)acrylate, stearyl (meth)acrylate, behenyl (meth)acrylate.

Specific examples of the acrylate ester monomer having a cyclic hydrocarbon-containing group include cyclohexyl (meth)acrylate, t-butylcyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate and 2-ethyl-2-adamantyl (meth)acrylate.

The halogenated olefin monomer (b1-2) has no fluorine atom.

The halogenated olefin monomer may be a C₂₋₂₀-olefin substituted with 1-10 Cl, Br or I atoms. The halogenated olefin monomer is preferably a chlorinated C₂₋₂₀-olefin, particularly a C₂₋₅-olefin having 1-5 Cl atoms. Preferred specific examples of the halogenated olefin monomer (b1-2) are vinyl halides such as vinyl chloride, vinyl bromide and vinyl iodide, and vinylidene halides such as vinylidene chloride, vinylidene bromide, vinylidene iodide. Since water- and oil-repellency (especially durability of water- and oil-repellency) becomes high, vinyl chloride and vinylidene chloride are preferred, and vinyl chloride is particularly preferred.

### (b3) Other fluorine-free monomer

The fluorine-containing polymer may comprise a fluorine-free monomer (b3) other than the monomer (b1).

Examples of the other fluorine-free monomer (b3) include ethylene, vinyl acetate, acrylonitrile, styrene, polyethylene glycol (meth)acrylate, polypropylene glycol (meth)acrylate, methoxypolyethylene glycol (meth)acrylate, methoxypolypropylene glycol (meth)acrylate and vinyl alkyl ether.

The monomer (b) may be used alone or in combination of two or more. Each of the monomers (a1), (a2), (b1), (b1-1), (b1-2) and (b3) may be used alone or in combination of two or more.

In the fluorine-containing polymer, the amount of the monomer (a) (generally, the total amount of the monomers (a1) and (a2)) is ≥ 10 wt.%, for example, ≥ 40 wt.%. The amount of the monomer (a) may be ≤ 95 wt.%, for example, ≤ 80 wt.%, or ≤ 75 wt.% or ≤ 70 wt.%, based on the fluorine-containing polymer.

In the fluorine-containing polymer, the weight ratio (a1):(a2) of the monomer (a1) to the monomer (a2) is 20:80 to 75:25, preferably 20:80 to 45:55, especially 20:80 to 40:60. These weight ratios are particularly preferred when the fluorine-containing polymer is applied to a nonwoven fabric.

Alternatively, the weight ratio (a1):(a2) of the monomers (a1) and (a2) may be preferably 50:50 to 75:25. These weight ratios are particularly preferred when the fluorine-containing polymer is applied to a knitted/woven material (a knitted material or a woven material), particularly a knitted/woven fabric (a knitted fabric or a woven fabric).

In the fluorine-containing polymer, based on 100 parts by weight (pbw hereinafter) of the fluorine-containing monomer (a), the following applies:
The amount of the fluorine-free monomer (b) may be 1-300 pbw, preferably 10-200 pbw;
   the amount of the fluorine-free non-crosslinkable monomer (b1) may be 1200 pbw, preferably 10-100 pbw,
the amount of the other fluorine-free monomer (b3) may be 0-100 pbw, for example 1-30 pbw;
the amount of the monomer (b1-1) may be 0-150 pbw, preferably 1-70 pbw;
the amount of the halogenated olefin monomer (b1-2) may be 0-150 pbw, preferably 1-60 pbw, and other fluorine-free monomer may be used.

Alternatively, based on the total amount of the monomers(a) and b) (generally, based on the fluorine-containing polymer), the amount of the monomer (a) may be 20-90 wt.%, preferably 30-80 wt.%, more preferably 35-70 wt.%, especially 40-65 wt.%,
the amount of the monomer (b) may be 10-80 wt.%, preferably 20-70 wt.%, more preferably 30-65 wt.%, especially 35-60 wt.%;
the amount of the monomer (b1) may be 20-70 wt.%, preferably 25-60 wt.%, particularly preferably 30-55 wt.%,
the amount of the other monomer (b3) may be 0-30 pbw, for example 1-10 pbw;
the amount of the acrylate ester monomer (b1-1) may be 20-70 wt.%, preferably 25-60 wt.%, especially 30-55 wt.%, and
the amount of the halogenated olefin monomer (b1-2) may be 0-60 wt.%, for example 5-50 wt.%, particularly 10-40 wt.%.

Based on the surface-treating composition, the amount of the fluorine-containing polymer (solid content) may be 0.01-60 wt.%, preferably 0.1-40 wt.%, more preferably 5-35 wt.%.

The fluorine-containing polymer may be present in the form of a solution dissolved in an organic solvent, but it is preferably present in the form of an aqueous dispersion.

In the present specification, unless explicitly indicated, when simply referred to as "acrylate" or "acrylamide", a compound in which the α-position is not only a hydrogen atom but also another group (for example, a monovalent organic group including a methyl group or a halogen atom) are included. In the present specification, the term "(meth)acrylate" means an acrylate or methacrylate, and the term "(meth)acrylamide" means an acrylamide or methacrylamide.

### (2) Liquid Medium

The liquid medium may be an aqueous medium. The liquid medium may be water alone or a mixture of water and a (water-miscible)organic solvent. The amount of the organic solvent may be at most 30 wt.%, for example, at most 10 wt.% (preferably at least 0.1%) based on the liquid medium. The liquid medium is preferably water alone. The liquid medium may be an organic solvent alone. The amount of the liquid medium may be 30 to 99.5 wt.%, particularly 50 to 99 wt.%, based on the fluorine-containing treating agent (or the surface-treating composition).

The aqueous medium may be added after producing the fluorine-containing polymer by polymerization. For example, after polymerizing a monomer in the presence of an organic solvent to prepare a fluorine-containing polymer, water is added and the organic solvent is distilled off. The organic solvent may not be distilled off. The surfactant may be added before polymerization or after polymerization, or may not be added. Even when the surfactant is not added, an aqueous dispersion in which the fluorine-containing polymer is well dispersed in the aqueous medium can be obtained.

### (3) Surfactant

The surface-treating composition may comprise a surfactant when it is an aqueous dispersion. The surfactant comprises at least one of a nonionic surfactant, a cationic surfactant and an anionic surfactant. In addition, the surfactant may comprise an amphoteric surfactant. Also, it may not comprise a surfactant.

When the surface-treating composition is an aqueous dispersion, it generally comprises a surfactant. When the surface-treating composition is an aqueous solution, the surface-treating composition generally does not comprise a surfactant.

The nonionic surfactant is a nonionic surfactant having an oxyalkylene group. Preferably, the number of carbon atoms of the alkylene group in an oxyalkylene group is 2-10. Preferably, the number of the oxyalkylene groups in the molecule of a nonionic surfactant is 2-100.

The nonionic surfactant may be, for example, an alkylene oxide adduct of linear or branched aliphatic (saturated and/or unsaturated) group, a polyalkylene glycol ester of a linear or branched (saturated and/or unsaturated) fatty acid, a polyoxyethylene (POE)/polyoxypropylene (POP) copolymer (a random copolymer or a block copolymer), an alkylene oxide adduct of acetylene glycol. Among them, preferred is a surfactant wherein structure of an alkylene oxide addition portion and a polyalkylene glycol portion is polyoxyethylene (POE), polyoxypropylene (POP) or a POE/POP copolymer (which may be a random copolymer or may be a block copolymer).

Preferably, the nonionic surfactant has the structure free from an aromatic group from a viewpoint of environmental problems (for example, biodegradability and environmental hormones).

The cationic surfactant may be an amine salt, a quaternary ammonium salt, or an oxyethylene-added ammonium salt. Specific examples of the cationic surfactant include amine salt type surfactants such as alkylamine salts, aminoalcohol fatty acid derivatives, polyamine fatty acid derivatives and imidazoline; quaternary ammonium salt type surfactants such as alkyltrimethylammonium salts, dialkyldimethylammonium salts, alkyldimethylbenzylammonium salt, pyridinium salt, alkylisoquinolinium salt and benzethonium chloride

Specific examples of the cationic surfactant include dodecyl trimethyl ammonium acetate, trimethyl tetradecyl ammonium chloride, hexadecyl trimethyl ammonium bromide, trimethyl octadecyl ammonium chloride, (dodecylmethyl benzyl) trimethyl ammonium chloride, benzyl dodecyl dimethyl ammonium chloride, methyldodecyldi(hydropolyoxyethylene)ammonium chloride, benzyldodecyldi(hydro polyoxyethylene)ammonium chloride and N-[2-(diethylamino)ethyl]oleamide hydrochloride.

Examples of the anionic surfactant include a fatty acid salt (for example, C₈₋₃₀-fatty acid), a sulfonate (for example, alkylsulfonic acid, alkylbenzenesulfonate (the alkyl is, for example, C₈₋₃₀-alkyl), a sulfate salt (for example, an alkyl sulfate salt (the alkyl is, for example, C₈₋₃₀-alkyl).

Examples of anionic surfactants are sodium lauryl sulfate, triethanolamine lauryl sulfate, sodium polyoxyethylene lauryl ether sulfate, sodium polyoxyethylene nonylphenyl ether sulfate, polyoxyethylene lauryl ether sulfate triethanolamine, sodium cocoyl sarcosinate, sodium N-cocoyl methyl taurine, sodium polyoxyethylene coco alkyl ether sulfate, sodium diether hexyl sulfosuccinate, sodium α-olefin sulfonate, sodium lauryl phosphate, and sodium polyoxyethylene lauryl ether phosphate.

Examples of the amphoteric surfactant include alanines, imidazolinium betaines, amidobetaines and betaine acetate. Specific examples thereof include lauryl betaine, stearyl betaine, lauryl carboxymethyl hydroxyethyl imidazolinium betaine, lauryl dimethyl aminoacetic betaine, and fatty acid amidopropyldimethylaminoacetic betaine.

Each of nonionic surfactant, cationic surfactant, anionic surfactant, and amphoteric surfactant may be used alone or in combination of two or more.

The surfactant is preferably an anionic surfactant and/or a nonionic surfactant. A combination of an anionic surfactant and a nonionic surfactant is preferred.

In the present invention, even when no surfactant is used, it is possible to form dispersion, particularly aqueous dispersion of the fluorine-containing polymer.

The amount of the surfactant may be 0.1-50 pbw, for example, 1-30 pbw, based on 100 pbw of the fluorine-containing polymer (or the total of the monomers).

### [Method for Producing Fluorine-Containing Polymer]

The fluorine-containing polymer in the present invention may be produced by any ordinary polymerization methods, and the conditions of the polymerization reaction can be arbitrarily selected. Examples of such polymerization methods include solution polymerization, suspension polymerization, and emulsion polymerization.

In the solution polymerization, a method dissolving the monomers in an organic solvent in the presence of a polymerization initiator, conducting nitrogen substitution, and then heating and stirring in the range of 30-120°C for 30 minutes to 48 hours, for example, 3-24 hours is adopted. Examples of the polymerization initiator include azobisisobutyronitrile, benzoyl peroxide, di-t-butyl peroxide, lauryl peroxide, cumene hydroperoxide, t-butyl peroxypivalate and diisopropyl peroxydicarbonate. The polymerization initiator may be used in an amount of 0.01-20 pbw, for example, 0.01-10 pbw based on 100 pbw of the monomer.

The organic solvent is inert to the monomer and dissolves them. Examples thereof include esters (for example, C₂₋₃₀-esters, specifically, ethyl acetate and butyl acetate), ketones (for example, C₂₋₃₀-ketone, specifically, methylethyl ketone, diisobutyl ketone), an alcohol (for example, a C₁₋₃₀-alcohol, specifically isopropyl alcohol). Specific examples of the organic solvent include acetone, chloroform, HCHC 225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichlorethylene, perchlorethylene, tetrachlorodifluoroethane and trichlorotrifluoroethane. The organic solvent may be used in an amount of 10 to 2000 pbw, for example, 50-1000 pbw, based on 100 pbw of the total of the monomers.

In the emulsion polymerization, preferably the monomers are emulsified in water in the presence of a polymerization initiator and an emulsifier, then purged with nitrogen, and stirred in the range of 50-80°C for 30 minutes to 48 hours, for example 3-24 hours to be polymerized. As the polymerization initiator, water-soluble ones such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, azobisisobutyronitrile, sodium peroxide, potassium persulfate and ammonium persulfate; oil-soluble ones such as azobisisobutyronitrile, benzoyl peroxide, di-t-butyl peroxide, lauryl peroxide, cumene hydroperoxide, t-butyl peroxypivalate and diisopropyl peroxydicarbonate may be used. The polymerization initiator may be used in the range of 0.01-10 pbw based on 100 pbw of the monomer.

To obtain a polymer aqueous dispersion having excellent storage stability, it is desirable that to form fine particles of a monomer in water and polymerized it with an emulsifying device capable of imparting strong crushing energy such as a high pressure homogenizer or an ultrasonic homogenizer. As the emulsifier, anionic, cationic or nonionic emulsifiers can be used, and the emulsifier is used in an amount of 0.5-20 pbw based on 100 pbw of the monomer. It is preferred to use anionic and/or nonionic and/or cationic emulsifiers. When the monomers are incompatible with each other, it is preferred to add a compatibilizer such as a water-soluble organic solvent or a low molecular weight monomer so as to sufficiently compatibilize these monomers. Emulsifiability and copolymerizability can be improved by adding the compatibilizing agent.

Examples of the water-soluble organic solvent include acetone, methylethyl ketone, ethyl acetate, propylene glycol, dipropylene glycol monomethyl ether, dipropylene glycol, tripropylene glycol and ethanol. They are used in the range of 1-50 pbw, for example 10-40 pbw, based on 100 pbw. Examples of the low molecular weight monomer include methyl methacrylate, glycidyl methacrylate, 2,2,2-trifluoroethyl methacrylate. They are used in the range of 1-50 pbw, for example, 10-40 pbw based on 100 pbw of the total amount of monomers.

In the polymerization, a chain transfer agent may be used. Depending on the amount of chain transfer agent used, the molecular weight of the polymer can be changed. Examples of the chain transfer agent include mercaptan group-containing compounds (particularly, alkyl mercaptans (having, for example, 1-30 carbon atoms)) such as lauryl mercaptan, thioglycol, and thioglycerol; and inorganic salts such as sodium hypophosphite and sodium bisulfite. The amount of the chain transfer agent may be used in the range of 0.01-10 pbw, for example 0.1-5 pbw, based on 100 pbw of the total amount of the monomers.

It is preferred to produce the fluorine-containing polymer by an emulsion polymerization method or a solution polymerization method.

After producing the fluorine-containing polymer by polymerization, it is preferred to add water (or aqueous medium) to disperse the fluorine-containing polymer in water.

Water (or an aqueous medium) may be added after producing the fluorine-containing polymer by polymerization. For example, after polymerizing a monomer in the presence of an organic solvent to prepare a fluorine-containing polymer, water is added to the polymer mixture, the organic solvent is distilled off, and the fluorine-containing polymer is dispersed in water. The organic solvent may not be distilled off. The surfactant may be added before polymerization or after polymerization, or may not be added. Even when no surfactant is added, a good aqueous dispersion can be obtained.

The surface-treating composition may contain (4) a curing agent (active hydrogen reactive compound or active hydrogen-containing compound). Generally, after the fluorine-containing polymer is produced, the curing agent (4) is added.

### (4) Curing agent

The surface-treating composition may comprise a curing agent (crosslinking agent) so as to satisfactorily cure the fluorine-containing polymer. Since the fluorine-free crosslinkable (meth)acrylate or (meth)acrylamide monomer is an active hydrogen-containing monomer or an active hydrogen reactive group-containing monomer, the fluorine-containing polymer has an active hydrogen or an active hydrogen reactive group. The curing agent is an active hydrogen reactive compound or an active hydrogen-containing compound so as to react with the active hydrogen or active hydrogen reactive group of the fluorine-containing polymer.

Examples of the active hydrogen reactive compound are polyisocyanate compounds, epoxy compounds, chloromethyl group-containing compounds, carboxyl group-containing compounds and hydrazide compounds.

Examples of the active hydrogen-containing compound are hydroxyl group-containing compounds, amino group-containing compounds, carboxyl group-containing compounds, ketone group-containing compounds, hydrazide compounds and melamine compounds.

The amount of the curing agent may be at most 100 pbw, for example, 0.01-30 pbw based on 100 pbw of the fluorine-containing polymer.

The curing agent is preferably a polyisocyanate compound.

The polyisocyanate compound is a compound having two or more isocyanate groups in one molecule. The polyisocyanate compound acts as a crosslinking agent. Examples of the polyisocyanate compound include aliphatic polyisocyanates, alicyclic polyisocyanates, araliphatic polyisocyanates, aromatic polyisocyanates and derivatives of these polyisocyanates.

Examples of the aliphatic polyisocyanates are aliphatic diisocyanate such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate and 2,6-diisocyanatomethylcaproate; and aliphatic triisocyanates such as lysine ester triisocyanate, 1,4,8-triisocyanato octane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyl octane.

Examples of the alicyclic polyisocyanates are alicyclic diisocyanates and alicyclic triisocyanates. Specific examples of the alicyclic polyisocyanate are 1,3-cyclopentene diisocyanate, 3-isocyanatomethyl-3,5,5-trimethylcyclohexyl isocyanate (isophorone diisocyanate) and 1,3,5-triisocyanatocyclohexane.

Examples of the araliphatic polyisocyanates are araliphatic diisocyanates and araliphatic triisocyanates. Specific examples of the araliphatic polyisocyanates include 1,3- or 1,4-xylylene diisocyanate or mixture thereof, 1,3- or 1,4-bis (1-isocyanato-1-methylethyl)benzene(tetramethylxylylenediisocyanate) or a mixture thereof and 1,3,5-triisocyanatomethylbenzene.

Examples of the aromatic polyisocyanates include aromatic diisocyanates, aromatic triisocyanates and aromatic tetraisocyanates. Specific examples of the aromatic polyisocyanates include m-phenylene diisocyanate, p-phenylene diisocyanate, 4,4'-diphenyl diisocyanate, 1,5-naphthalene diisocyanate, 2,4'- or 4,4'-diphenylmethane diisocyanate or mixtures thereof, 2,4- or 2,6 -tolylene diisocyanate or a mixture thereof, triphenylmethane-4,4',4"-triisocyanate, and 4,4'-diphenylmethane-2,2',5,5'-tetraisocyanate.

Examples of the derivative of polyisocyanate include various derivatives such as dimer, trimer, biuret, allophanate, carbodiimide, uretdione, uretimine, isocyanurate and iminooxadiazinedione of the above-mentioned polyisocyanate compound.

These polyisocyanates can be used alone or in combination of two or more.

As the polyisocyanate compound, it is preferred to use a blocked polyisocyanate compound (a blocked isocyanate) which is a compound obtained by blocking the isocyanate group of the polyisocyanate compound with a blocking agent. It is preferred to use a blocked polyisocyanate compound because it is relatively stable even in an aqueous solution and can be used in the same aqueous solution as the surface-treating agent.

The blocking agent is an agent which blocks free isocyanate groups. By heating the blocked polyisocyanate compound to, for example, ≥ 100°C, for example, ≥ 130°C, the isocyanate group is regenerated and can easily react with the hydroxyl group. Examples of the blocking agent include a phenol compound, a lactam compound, an aliphatic alcohol compound and an oxime compound.

These polyisocyanate compounds can be used alone or in combination of two or more.

The epoxy compound is a compound having an epoxy group. Examples of the epoxy compounds are epoxy compounds having polyoxyalkylene groups, such as polyglycerol polyglycidyl ether and polypropylene glycol diglycidyl ether; and sorbitol polyglycidyl ether.

The chloromethyl group-containing compound is a compound having a chloromethyl group. Examples of the chloromethyl group-containing compounds include chloromethyl polystyrene.

The carboxyl group-containing compound is a compound having a carboxyl group. Examples of the carboxyl group-containing compounds include (poly)acrylic acid and (poly) methacrylic acid.

The ketone group-containing compound is a compound having a ketone group. Examples of the ketone group-containing compounds include (poly)diacetone acrylamide and diacetone alcohol.

The hydrazide compound is a compound having a hydrazide group. Examples of the hydrazide compounds include hydrazine, carbohydrazide and adipic acid hydrazide.

Examples of the melamine compounds include melamine resins and methyl etherified melamine resins.

### (5) Other component

The surface-treating composition may comprise the component (5) other than the above components (1)-(4). Generally, after the fluorine-containing polymer is produced, the other component (5) is added. Examples of the other components include fluorine-free water-repellent compounds.

### Fluorine-free water-repellent compound

The surface-treating composition may comprise a fluorine atom-free water repellent compound (fluorine-free water repellent compound).

The fluorine-free water repellent compound may be a fluorine-free acrylate polymer, a saturated or unsaturated hydrocarbon compound or a silicone compound.

The fluorine-free acrylate polymer is a homopolymer consisting of one fluorine-free acrylate monomer, a copolymer comprising at least two fluorine-free acrylate monomers, or a copolymer comprising at least one fluorine-free acrylate monomer and at least one other fluorine-free monomer (such as an ethylenically unsaturated compound, for example, ethylene, vinyl type monomer).

The fluorine-free acrylate monomer composing the fluorine-free acrylate polymer is the compound of the formula CH₂=CA-T wherein
is A H, methyl or halogen other than F (for example, Cl, Br and I), and T is H, a chain or cyclic C₁₋₃₀-hydrocarbon group, or a chain or cyclic C₁₋₃₁-organic group having an ester bond.

Examples of the chain or cyclic C₁₋₃₀-hydrocarbon group include a linear or branched aliphatic C₁₋₃₀-hydrocarbon group, a C₄₋₃₀-cycloaliphatic group, an aromatic C₆₋₃₀- hydrocarbon group and an aromatic aliphatic C₇₋₃₀-hydrocarbon group.

Examples of the chain or cyclic C₁₋₃₁-organic group having an ester bond include -C(=O)-O-Q and -OC(=O)-Q (wherein Q is a linear or branched aliphatic C₁₋₃₀-hydrocarbon group, a C₄₋₃₀-cycloaliphatic group, an aromatic C₆₋₃₀-hydrocarbon group or an araliphatic C₇₋₃₀-hydrocarbon group).

Examples of the fluorine-free acrylate monomers include alkyl(meth)acrylate, polyethyleneglycol(meth)acrylate, polypropyleneglycol (meth)acrylate, methoxypolyethyleneglycol (meth)acrylate, methoxypolypropyleneglycol (meth)acrylate.

The fluorine-free acrylate monomer is preferably an alkyl(meth)acrylate ester. The number of carbon atoms of the alkyl group may be 1-30, for example 6-30 (for example, 10-30). Specific examples of fluorine-free acrylate monomers include lauryl(meth)acrylate, stearyl(meth)acrylate and behenyl(meth)acrylate.

The fluorine-free acrylate polymer can be produced by the same polymerization method as that of the fluorine-containing polymer.

The saturated or unsaturated hydrocarbon compound is preferably a saturated hydrocarbon. In the saturated or unsaturated hydrocarbon compound, the carbon number may be at least 15, preferably 20-300, for example, 25-100. Specific examples of the saturated or unsaturated hydrocarbon compound include paraffin.

The silicone compound is generally used as a water repellent agent. The silicone compound is not limited as long as it is a compound showing water-repellency.

The amount of the fluorine-free water repellent compound may be at most 500 pbw, for example, 5-200 pbw, particularly 5-100 pbw based on 100 pbw of the fluorine-containing polymer.

The present treating composition may be in the form of a solution, an emulsion (particularly an aqueous dispersion) or an aerosol, preferably an aqueous dispersion. The treating composition comprises a polymer (the active component of the surface-treating agent) and a medium (in particular, a liquid medium such as an organic solvent and/or water). The amount of the medium may be, for example, 5-99.9 wt.%, particularly 10-80 wt.%, based on the treating composition.

In the treating composition, the concentration of the polymer may be 0.01-95 wt.%, for example, 5-50 wt.%.

The present treating composition can be applied to a substrate to be treated by a known method. Usually, the fluorine-containing composition is diluted or dispersed with an organic solvent or water, is adhered to surfaces of the substrate by a well-known procedure such as an immersion coating, a spray coating and a foam coating, and is dried. If necessary, it is applied together with a suitable crosslinking agent, followed by curing. It is also possible to add e.g. mothproofing agents, softening agents, antibacterial agents, flame retarders, antistatic agents, coating material fixing agents, and crease-proofing agents to the present treating composition. For the immersion coating, the concentration of the fluorine-containing polymer in the treating liquid contacted with the textile product may be 0.01-10 wt.%, for example, 0.05-10 wt.%, based on the treating liquid.

Examples of the substrate to be treated with the present treating composition (for example, a water- and oil-repellent agent) include a textile, masonry, a filter (for example, an electrostatic filter), a dust protective mask, a part of fuel cell (for example, a gaseous diffusion electrode and a gaseous diffusion support), glass, paper, wood, leather, fur, asbestos, brick, cement, metal and oxide, ceramics, plastics, a coated surface and a plaster. The textile includes various examples. Examples of the textile include animal- or vegetable-origin natural fibers such as cotton, hemp, wool and silk; synthetic fibers such as polyamide, polyester, polyvinyl alcohol, polyacrylonitrile, polyvinyl chloride and polypropylene; semi-synthetic fibers such as rayon and acetate; inorganic fibers such as glass fiber, carbon fiber and asbestos fiber; and a mixture of these fibers.

The textile may be in the form of a fiber or a fabric.

The present treating composition can also be used as an internal mold releasing agent or an external mold release agent.

The polymer can be applied to the textile product by any of the methods known for treating textiles (e.g. fabric) with liquids. The textile product may be immersed in the solution or the solution may be deposited or sprayed on the textile product. The treated textile product is preferably dried and cured by heating in order to develop water-repellency and oil-repellency. The heating temperature may be, for example, 100-200°C, 100-170°C, or 100-120°C. Good performance can be obtained even at low temperature heating (for example, 100-140°C) in the present invention. In the present invention, the heating time may be 5 seconds to 60 minutes, for example 30 seconds to 3 minutes.

Alternatively, the polymer may be applied to the textile by a cleaning process, for example, may be applied to textile products in laundry applications or dry cleaning processes.

The textile product to be treated is typically fabrics, which includes knitted material (knitted fabrics), woven material (woven fabrics) and nonwoven fabrics and fabrics in the form of clothing and carpets as well as yarns and an intermediate textile product (such as sliver or roving). The present treating agent is particularly effective in rendering synthetic fibers hydrophobic and water-repellent. Also, the process of the present invention generally renders the textile product hydrophobic and water repellent.

Examples of the fibers composing the textile products are natural fibers, synthetic fibers, semisynthetic fibers, regenerated fibers and inorganic fibers. One kind of fiber may be used alone, or two or more kinds may be used in combination.

Examples of the natural fibers are cellulosic fibers such as cotton, flax, wood pulp, chitin, chitosan, wool and silk. Specific examples of wood pulp include mechanical pulp such as ground wood pulp (GP), pressurized ground wood pulp(PGW) and thermomechanical pulp(TMP); chemical pulp such as high yield softwood unbleached kraft pulp (HNKP; N material), softwood bleached kraft pulp (NBKP; N material, NB material), hardwood unbleached kraft pulp (LUKP; L material), hardwood bleached kraft pulp (LBKP, L material); used paper pulp such as deinking pulp(DIP) and waste pulp (WP); and semi-chemical pulp (CP).

Examples of the synthetic fibers include polyesters such as polyethylene terephthalate, polybutylene terephthalate, polytrimethylene terephthalate, copolyester; polyolefins such as linear low density polyethylene, low density polyethylene, high density polyethylene and polypropylene; polyamide such nylon 6, nylon 66, nylon 610, and nylon 46; acrylic fiber such as polyacrylonitrile; polyvinyl alcohol, polyurethane and polyvinyl chloride.

Examples of the semisynthetic fibers include acetate and triacetate.
Examples of the regenerated fibers are rayon, cupra, polynocic rayon, lyocell and tencel.

Examples of the inorganic fibers include glass fiber and carbon fiber.

Alternatively, the fibrous substrate can be a leather. The polymeric product can be applied to leather from aqueous solution or emulsion at various stages of leather processing, for example during leather wet end processing or during leather finishing, to render the leather hydrophobic and oleophobic. The fibrous substrate can alternatively be paper. The polymeric product can be applied to preformed paper or at various stages of papermaking, for example during drying of the paper.

The term "treatment" means that the treating agent is applied to the substrate by, for example, immersion, spray, or coating. The fluorine-containing polymer which is an active component of the treating agent can penetrate the internal of the substrate or can adhere on the surface of the substrate by the treatment.

The present invention is now described in detail by way of Examples.

In the following Examples, parts, % and ratio are parts by weight (pbw), % by weight (wt.%) and weight ratio, unless otherwise specified.

The procedures of the tests were performed in the following manner.

### Shower water-repellency test (Spray)

Shower water-repellency test was conducted according to JIS-L-1092. The shower water-repellency was expressed by water-repellency No. (as shown in Table 1).

A glass funnel having a volume of at least 250 mL, and a spray nozzle which can spray 250 mL of water for 20-30 seconds are used. A test piece frame is a metal frame having a diameter of 15cm. Three sheets of a test piece having a size of about 20 cm x 20 cm are prepared and the sheet is mounted on a test piece holding frame so that the sheet has no wrinkle. The center of the spray is located on the center of the sheet. Room temperature water (250 mL) is charged into the glass funnel and sprayed on the test piece sheet (for time of 25-30 seconds). The holding frame is removed from a stand, one edge of the holding frame is grasped so that a front surface is downside and the other edge is lightly hit with a stiff substance. The holding frame is further rotated 180° and the same procedure is repeated to drop excess water droplets. The wet test piece is compared with a wet comparison standard to grade 0, 50, 70, 80, 90 and 100 points in order of poor water-repellency to excellent water-repellency. The results are obtained from an average of three measurements.

**[Table 1]**

| Water-repellency No. | State |
|---|---|
| 100 | No wet or water droplets adhesion on surface |
| 90 | No wet but small water droplets adhesion on surface |
| 80 | Separate small water droplets-like wet on surface |
| 70 | Wet on half of surface and separate small wet which penetrates fabric |
| 50 | Wet on whole surface |
| 0 | Wet on front and back whole surfaces |

### Oil-repellency test

A treated test fabric is stored in a thermo-hygrostat at a temperature of 21 °C and a humidity of 65% for at least 4 hours. A test liquid (shown in Table 2) is also stored at a temperature of 21 °C. The test is conducted in a thermo-hygrostat chamber with a temperature of 21 °C and a humidity of 65%. 0.05 ml of the test liquid is dropped gently onto the test fabric. After left for 30 seconds, if the droplet remains on the test fabric, the test liquid is passed. Oil-repellency is the highest score of the passed test solution, which is evaluated in nine stages of Fail and 1-8 from poor to good oil-repellency.

**[Table 2]**

| Oil-repellency test liquid | | |
|---|---|---|
| Scor e | Test liquid | Surface tension (dyne/cm) |
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-Hexadecane | 27.3 |
| 2 | n-Hexadecane35/Nujol 65 mixture liquid | 29.6 |
| 1 | Nujol | 31.2 |
| Fail | Inferior to 1 | - |

### Water-repellency test (IPA)

A treated test fabric is stored in a thermo-hygrostat at a temperature of 21°C and a humidity of 65% for at least 4 hours. A test liquid (isopropyl alcohol (IPA), water and mixed liquid thereof, shown in Table 3) is also stored at a temperature of 21°C. The test is conducted in a thermo-hygrostat chamber with a temperature of 21°C and a humidity of 65%. 50 µl of the test liquid is gently dropped onto the test fabric. After left for 30 seconds, if the droplet remains on the test fabric, the test liquid is passed. Water-repellency is the score of the passed test liquid of highest content (volume%) isopropyl alcohol(IPA), which is evaluated in 12 stages of Fail and 0-10 from poor to good water-repellency.

**[Table 3]**

| Water-repellency test liquid | | |
|---|---|---|
| | (Volume ratio %) | |
| Score | Isopropyl alcohol | Water |
| 10 | 100 | 0 |
| 9 | 90 | 10 |
| 8 | 80 | 20 |
| 7 | 70 | 30 |
| 6 | 60 | 40 |
| 5 | 50 | 50 |
| 4 | 40 | 60 |
| 3 | 30 | 70 |
| 2 | 20 | 80 |
| 1 | 10 | 90 |
| 0 | 0 | 100 |
| Fail | Inferior to Isopropyl alcohol 0/water 100 | |

### Water pressure test (Hydro Head)

According to AATCC 127-2003 water pressure resistance test method, water pressure resistance was measured with a water pressure resistance measuring apparatus.

### IPR (Wate Impact Penetration Resitance) test

The test was conducted according to AATCC TES Method 42-2000.

### Washing durability

According to JIS L-0217-103, the water- and oil-repellency is evaluated by repeating washings 5, 10 and 20 times(HL5, 10, 20). HL0 means that the evaluation was done without washing.

### Production Example 1

65.1 g of CF₃CF₂-(CF₂CF₂)ₙ-CH₂CH₂OCOC(Cl)=CH₂ (n=2.0) (13FClA), 65.1 g of CF₃CF₂-(CF₂CF₂)ₙ-CH₂CH₂OCOCH=CH₂ (n=2.0) (13FA), 30.9 g of stearyl acrylate, 400 g of pure water, 56 g of a water-soluble glycol solvent, 1.56 g of alkyldimethylammonium chloride and 16.1 g of polyoxyethylene alkyl ether were charged into a 1000 mL autoclave, and emulsified and dispersed by ultrasonic wave under stirring at 60 °C for 15 minutes. After replacing the inside of the flask with nitrogen, 61.2 g of vinyl chloride (VCM) was press-injected in, 0.4 g of an azo group-containing water-soluble initiator was added, and the mixture was reacted at 60°C for 20 hours to obtain an aqueous dispersion of polymer. A composition of the polymer was almost the same as a composition of the charged monomers.

### Production Example 2

91.14 g of CF₃CF₂-(CF₂CF₂)ₙ-CH₂CH₂OCOC(Cl)=CH₂ (n=2.0) (13FClA), 39.06 g of CF₃CF₂-(CF₂CF₂)ₙ-CH₂CH₂OCOCH=CH₂ (n=2.0) (13FA), 30.9 g of stearyl acrylate, 400 g of pure water, 56 g of a water-soluble glycol solvent, 1.56 g of alkyldimethylammonium chloride and 16.1 g of polyoxyethylene alkyl ether were charged into a 1000 mL autoclave, and emulsified and dispersed by ultrasonic wave under stirring at 60 °C for 15 minutes. After replacing the inside of the flask with nitrogen, 61.2 g of vinyl chloride (VCM) was press-injected in, 0.4 g of an azo group-containing water-soluble initiator was added, and the mixture was reacted at 60°C for 20 hours to obtain an aqueous dispersion of polymer. A composition of the polymer was almost the same as a composition of the charged monomers.

### Production Example 3

39.53 g of CF₃CF₂-(CF₂CF₂)ₙ-CH₂CH₂OCOC(Cl)=CH₂ (n=2.0) (13FClA), 79.29 g of CF₃CF₂-(CF₂CF₂)ₙ-CH₂CH₂OCOCH=CH₂ (n=2.0) (13FA), 46.01 g of stearyl acrylate, 415 g of pure water, 60 g of a water-soluble glycol solvent and 20.5 g of polyoxyethylene alkyl ether were charged into a 1000 mL autoclave, and emulsified and dispersed with ultrasonic wave under stirring at 60 °C for 15 minutes. After replacing the inside of the flask with nitrogen, 50 g of vinyl chloride (VCM) was press-injected in, 0.4 g of an azo group-containing water-soluble initiator was added, and the mixture was reacted at 60°C for 20 hours to obtain an aqueous dispersion of polymer. A composition of the polymer was almost the same as a composition of the charged monomers.

### Production Example 4

65.1 g of CF₃CF₂-(CF₂CF₂)ₙ-CH₂CH₂OCOC(Cl)=CH₂ (n=2.0) (13FClA), 65.1 g of CF₃CF₂-(CF₂CF₂)ₙ-CH₂CH₂OCOC(CH₃)=CH₂ (n=2.0) (13FMA), 30.9 g of stearyl acrylate, 400 g of pure water, 56 g of a water-soluble glycol solvent, 1.56 g of alkyldimethylammonium chloride and 16.1 g of polyoxyethylene alkyl ether were charged into a 1000 mL autoclave, and emulsified and dispersed by ultrasonic wave under stirring at 60 °C for 15 minutes. After replacing the inside of the flask with nitrogen, 61.2 g of vinyl chloride (VCM) was press-injected in, 0.4 g of an azo group-containing water-soluble initiator was added, and the mixture was reacted at 60°C for 20 hours to obtain an aqueous dispersion of polymer. A composition of the polymer was almost the same as a composition of the charged monomers.

### Production Example 5

100 g of CF₃CF₂-(CF₂CF₂)ₙ-CH₂CH₂OCOC(Cl)=CH₂ (n=2.0) (13FClA), 33 g of CF₃CF₂-(CF₂CF₂)ₙ-CH₂CH₂OCOCH=CH₂ (n=2.0) (13FA), 89 g of stearyl acrylate, 400 g of pure water, 56 g of a water-soluble glycol solvent, 1.56 g of alkyldimethylammonium chloride and 16.1 g of polyoxyethylene alkyl ether were charged into a 1000 mL autoclave, and emulsified and dispersed by ultrasonic wave under stirring at 60 °C for 15 minutes. After replacing the inside of the flask with nitrogen, 0.4 g of an azo group-containing water-soluble initiator was added, and the mixture was reacted at 60°C for 20 hours to obtain an aqueous dispersion of polymer. A composition of the polymer was almost the same as a composition of the charged monomers.

### Comparative Production Example 1

108 g of CF₃CF₂-(CF₂CF₂)ₙ-CH₂CH₂OCOCH=CH₂ (n=3.2) (NSFA), 81.7 g of stearyl acrylate, 565 g of pure water, 47 g of a water-soluble glycol solvent and 30.3 g of polyoxyethylene alkyl ether were charged into a 1000 mL autoclave, and emulsified and dispersed by ultrasonic wave under stirring at 60 °C for 15 minutes. After replacing the inside of the flask with nitrogen, 62 g of vinyl chloride (VCM) was press-injected in, 0.4 g of an azo group-containing water-soluble initiator was added, and the mixture was reacted at 60°C for 20 hours to obtain an aqueous dispersion of polymer. A composition of the polymer was almost the same as a composition of the charged monomers.

### Comparative Production Example 2

130 g of CF₃CF₂-(CF₂CF₂)ₙ-CH₂CH₂OCOC(Cl)=CH₂ (n=2.0) (13FClA), 30.9 g of stearyl acrylate, 400 g of pure water, 56 g of a water-soluble glycol solvent, 1.56 g of alkyldimethylammonium chloride and 16.1 g of polyoxyethylene alkyl ether were charged into a 1000 mL autoclave, and emulsified and dispersed by ultrasonic wave under stirring at 60 °C for 15 minutes. After replacing the inside of the flask with nitrogen, 61.2 g of vinyl chloride (VCM) was press-injected in, 0.4 g of an azo group-containing water-soluble initiator was added, and the mixture was reacted at 60°C for 20 hours to obtain an aqueous dispersion of polymer. A composition of the polymer was almost the same as a composition of the charged monomers.

### Comparative Production Example 3

130 g of CF₃CF₂-(CF₂CF₂)ₙ-CH₂CH₂OCOCH=CH₂ (n=2.0) (13FA), 30.9 g of stearyl acrylate, 400 g of pure water, 56 g of a water-soluble glycol solvent, 1.56 g of alkyldimethylammonium chloride and 16.1 g of polyoxyethylene alkyl ether were charged into a 1000 mL autoclave, and emulsified and dispersed by ultrasonic wave under stirring at 60 °C for 15 minutes. After replacing the inside of the flask with nitrogen, 61.2 g of vinyl chloride (VCM) was press-injected in, 0.4 g of an azo group-containing water-soluble initiator was added, and the mixture was reacted at 60°C for 20 hours to obtain an aqueous dispersion of polymer. A composition of the polymer was almost the same as a composition of the charged monomers.

### Comparative Production Example 4

130 g of CF₃CF₂-(CF₂CF₂)ₙ-CH₂CH₂OCOC(CH₃)=CH₂ (n=2.0) (13FMA), 30.9 g of stearyl acrylate, 400 g of pure water, 56 g of a water-soluble glycol solvent, 1.56 g of alkyldimethylammonium chloride and 16.1 g of polyoxyethylene alkyl ether were charged into a 1000 mL autoclave, and emulsified and dispersed by ultrasonic wave under stirring at 60 °C for 15 minutes. After replacing the inside of the flask with nitrogen, 61.2 g of vinyl chloride (VCM) was press-injected in, 0.4 g of an azo group-containing water-soluble initiator was added, and the mixture was reacted at 60°C for 20 hours to obtain an aqueous dispersion of polymer. A composition of the polymer was almost the same as a composition of the charged monomers.

### Comparative Production Example 5

65 g of CF₃CF₂-(CF₂CF₂)ₙ-CH₂CH₂OCOCH=CH₂ (n=2.0) (13FA), 65 g of CF₃CF₂-(CF₂CF₂)ₙ-CH₂CH₂OCOC(CH₃)=CH₂(n=2.0) (13FMA), 30.9 g of stearyl acrylate, 400 g of pure water, 56 g of a water-soluble glycol solvent, 1.56 g of alkyldimethylammonium chloride and 16.1 g of polyoxyethylene alkyl ether were charged into a 1000 mL autoclave, and emulsified and dispersed by ultrasonic wave under stirring at 60 °C for 15 minutes. After replacing the inside of the flask with nitrogen, 61.2 g of vinyl chloride (VCM) was press-injected in, 0.4 g of an azo group-containing water-soluble initiator was added, and the mixture was reacted at 60°C for 20 hours to obtain an aqueous dispersion of polymer. A composition of the polymer was almost the same as a composition of the charged monomers.

### Example 1

The aqueous liquid prepared in Production Example 1 was diluted with pure water so that the concentration of the fluorine-containing polymer became 30% solid content, further diluted with water so that the proportion of the 30% diluted liquid was 5%, a test liquid (100 g) of 5.00% was prepared. An aqueous dispersion of methyl ketoxime block methylene diisocyanate (BI) as a crosslinking agent was added at 1.00% and stirred sufficiently, then 10 sheets of polyethylene terephthalate (PET) woven fabric (500 mm x 200 mm) and Nylon woven fabric (500 mm x 200 mm) were continuously immersed in this test liquid, passed through a mangle and treated with a pin tenter at 170°C for 1 minute. Likewise, after diluting the concentration of the fluorine-containing polymer to be a 30% solid content, further diluting with water so that a proportion of the 30% diluted liquid was 1%, and PP(Poly Propylene) nonwoven fabric (500 mm x 200 mm) was immersed, passed through a mangle and treated with a pin tenter at 135° C for 30 seconds. Thereafter, each of the PET woven fabric and the Nylon woven fabric was subjected to the shower water-repellency test, the oil-repellency test and the washing durability test thereof, and the PP nonwoven fabric was subjected to the water-repellency test (the shower water-repellency test, the water-repellency test (IPA), the IPR test, the water pressure resistance test). The results are shown in Table A.

### Examples 2-5 and Comparative Examples 1-5

The aqueous liquids prepared in Production Examples 2-5 (Examples 2-5) and in Comparative Production Examples 1-5 (Comparative Examples 1-5) were diluted with pure water so that the concentration of the fluorine-containing polymer in each case was 30% solid content. Thereafter, the same procedure as in Example 1 was carried out and evaluated. The results are shown in Table A.

The meanings of symbols are as follows.

**[Table 4]**

| Symbol | Compound name·Chemical formula |
|---|---|
| 13FClA | C₆F₁₃CH₂CH₂OCOC(Cl) =CH₂ |
| 13FA | C₆F₁₃CH₂CH₂OCOCH=CH₂ |
| 13FMA | C₆F₁₃CH₂CH₂OCOC(CH₃) =CH₂ |
| StA | C₁₈H₃₇OCOCH=CH₂ |
| VCM | CH₂=CHCl |
| NSFA | C₈F₁₇CH₂CH₂OCOC(CH₃) =CH₂ |
| BI | Methyl ketoxime block methylene diisocyanate aqueous dispersion |

**[Table A]**

| Table A | | | Example | | | | | Carparative Example | | | | |
|---|---|---|---|---|---|---|---|---|---|---|---|---|
| | | | 1 | 2 | 3 | 4 | 5 | 1 | 2 | 3 | 4 | 5 |
| | Monomer | | Prod. Ex.1 | Prod. Ex.2 | Prod. Ex. 3 | Prod. Ex. 4 | Prod. Ex. 5 | Can. Prod. Ex. 1 | Can. Prod. Ex. 2 | Can. Prod. Ex. 3 | Can. Prod. Ex. 4 | Can. Prod. Ex. 5 |
| | 13FCLA | | 29.3 | 41 | 18.4 | 29.3 | 45 | | 58.6 | | | |
| | 13FA | | 29.3 | 17.6 | 36.9 | | 15 | | | 58.6 | | 29.3 |
| | 13FMA | | | | | 29.3 | | | | | 58.6 | 29.3 |
| | NSEA | | | | | | | 43 | | | | |
| | StA | | 14 | 14 | 21.4 | 14 | 40 | 32.4 | 14 | 14 | 14 | 14 |
| | VCM | | 27.4 | 27.4 | 23.3 | 27.4 | | 24.6 | 27.4 | 27.4 | 27.4 | 27.4 |
| | Total | | 100 | 100 | 100 | 100 | 100 | 100 | 100 | 100 | 100 | 100 |
| Used fabric | Used Concentra tion | Repelle ncy BI | 5% | 5% | 5% | 5% | 5% | 5% | 5% | 5% | 5% | 5% |
| | | | 1% | 1% | 1% | 1% | 1% | 1% | 1% | 1% | 1% | 1% |
| PET Woven fabric cured at 170°C for 1 min. | Spray | HL0 | 100 | 100 | 100 | 100 | 100 | 100 | 100 | 80 | 100 | 80 |
| | | HL5 | 100 | 100 | 100 | 100 | 90 | 100 | 90 | 70 | 70 | 70 |
| | | HL10 | 90 | 90 | 90 | 90 | 80 | 90 | 70 | 50 | 50 | 50 |
| | | HL20 | 80 | 85 | 80 | 70 | 70 | 70 | 50 | 50 | 50 | 50 |
| | Oil-repellenc Y | HL0 | 5 | 5 | 5 | 5 | 5 | 5 | 4 | 5 | 4 | 4 |
| | | HL5 | 5 | 4 | 5 | 4 | 4 | 4 | 3 | 5 | 3 | 4 |
| | | HL10 | 4 | 4 | 4 | 4 | 4 | 4 | 2 | 3 | 2 | 2 |
| | | HL20 | 4 | 4 | 4 | 4 | 4 | 3 | 2 | 2 | 1 | 1 |
| Nylon Woven fabric cured at 170°C for 1 min. | Spray | HL0 | 100 | 100 | 100 | 100 | 100 | 100 | 100 | 80 | 100 | 90 |
| | | HL5 | 90 | 95 | 90 | 90 | 80 | 90 | 85 | 70 | 70 | 70 |
| | | HL10 | 85 | 90 | 80 | 80 | 70 | 80 | 70 | 50 | 50 | 50 |
| | | HICO | 80 | 85 | 70 | 80 | 60 | 70 | 50 | 50 | 50 | 50 |
| | oil-repellenc Y | HL0 | 5 | 5 | 5 | 5 | 5 | 5 | 3 | 5 | 4 | 4 |
| | | HL5 | 5 | 4 | 5 | 4 | 4 | 4 | 3 | 4 | 3 | 3 |
| | | HL10 | 4 | 4 | 4 | 4 | 3 | 3 | 2 | 3 | 2 | 2 |
| | | HL20 | 4 | 4 | 4 | 4 | 2 | 3 | 2 | 2 | 1 | 1 |
| PP Nonwoven fabric cured at 135 °C x 30 sec. | Spray | | 90 | 90 | 90 | 80 | 90 | 70 | 60 | 50 | 70 | 70 |
| | IPA | | 8 | 8 | 9 | 8 | 9 | 5 | 4 | 4 | 4 | 5 |
| | IPR(g) | | 0.11 | 0.12 | 0.11 | 0.15 | 0.1 | 0.24 | 0.23 | 0.25 | 0.25 | 0.28 |
| | HH(mmbr) | | 67.3 | 62.4 | 64.2 | 62.1 | 65.2 | 42.1 | 45.3 | 48.2 | 50.2 | 43.2 |

### INDUSTRIAL APPLICABILITY

The surface-treating composition of the present invention may be used, for example, as a water- and oil-repellent agent, a soil resistant agent and a soil release agent.

## Claims

1. A composition which is a surface-treating composition comprising
(1) a fluorine-containing polymer having a repeating unit derived from a fluorine-containing monomer (a) and a repeating unit derived from a fluorine-free non-crosslinkable monomer (b),
the fluorine-containing monomer (a) comprises
- a first monomer (a1) of the formula:
CH₂=C(-Cl)-C(=O)-Y¹-Z¹-Rf¹
wherein
Y¹ is -O- or -NH-,
Z¹ is a direct bond or a divalent organic group, and
Rf¹ is C₁₋₆-perfluoroalkyl, and
- a second monomer (a2) of the formula:
CH₂=C(-X²)-C(=O)-Y²-Z²-Rf²
wherein
X² is H or a monovalent organic group,
Y² is -O- or -NH-,
Z² is a direct bond or a divalent organic group, and
Rf² is C₁₋₆-perfluoroalkyl,
wherein the weight ratio (a1):(a2) of the monomers (a1) and (a2) is 20:80 to 75:25; and
the fluorine-free non-crosslinkable monomer (b) comprises a monomer (b1) of the formula CH₂=CA-T wherein A is H, methyl or halogen other than F, and T is H, halogen other than F, a chain or cyclic C₁₋₃₀-hydrocarbon group, or a chain or cyclic C₁₋₃₀-organic group having an ester bond;
(2) a liquid aqueous medium; and
(3) a surfactant.

2. The composition of claim 1, wherein X² in the monomer (a2) is H.

3. The composition of claim 1 or 2, wherein in the monomers (a1) and (a2),
Y¹, Y² each are -O-, and
Z¹, Z² each independently are a direct bond, a C₁₋₁₀-aliphatic group, a C₆₋₁₈-aromatic group, a C₆₋₁₈-cycloaliphatic group, -R²(R¹)N-SO₂- or -R²(R¹)N-CO- (wherein R¹ is C₁₋₁₀-alkyl, and R² is linear or branched C₁₋₁₀-alkylene), -CH₂CH(OR³)CH₂-(Ar-O)ₚ- (wherein R³ is H or C₁₋₁₀-acyl, Ar is arylene, and p is 0 or 1), -(CH₂)ᵣ-Ar-(O)_{q}- (wherein Ar is arylene, q is 0 or 1, and r is 0-10), or -(CH₂)ₘ-SO₂-(CH₂)ₙ- or-(CH₂)ₘ-S-(CH₂)ₙ- (wherein m is 1-10, and n is 0-10) .

4. The composition of any of claims 1-3, wherein the amount of organic solvent in the liquid aqueous medium is ≤ 30 wt.%.

5. The composition of any of claims 1-3, wherein the fluorine-free non-crosslinkable monomer (b) is at least one of
(b1-1) an acrylate ester monomer of the formula:
CH₂=CA²¹-C(=O)-O-A²²
wherein A²¹ is H, methyl or halogen other than F, and A²² is a C₁₋₃₀-hydrocarbon group, and
(b1-2) a halogenated C₂₋₂₀-olefin monomer substituted with 1-2 Cl, Br or I atoms.

6. The composition of claim 5, wherein A²² in the monomer (b1-1) is an acyclic aliphatic C₁₂₋₃₀-hydrocarbon group.

7. The composition of claim 5, wherein the halogenated olefin monomer (b1-2) is vinyl chloride or vinylidene chloride.

8. The composition of any of claims 1-7, wherein the amount of the fluorine-containing monomer (a) is 20-90 wt.-%, and the amount of the fluorine-free monomer (b) is 10-80 wt.-%, based on the total amount of the fluorine-containing monomer (a) and the fluorine-free monomer (b).

9. The composition of any of claims 1-8, which further comprises a curing agent (4) which is a blocked polyisocyanate compound.

10. The composition of any of claims 1-9, which contains
- 0.01-60 wt.-%, based on the composition, of the fluorine-containing polymer (1)
- 30-99.5 wt.-%, based on the composition, of the liquid medium (2), and
- 0.1-50 parts by weight, based on 100 parts by weight of the fluorine-containing polymer, of surfactant (3).

11. A method for producing a treated textile product, comprising applying the composition of any of claims 1-10 to a textile product.

12. The method of claim 11, wherein the textile product is a nonwoven fabric, and the weight ratio (a1):(a2) of the repeating unit (a1) to the repeating unit (a2) in the fluorine-containing polymer is 20:80 to 45:55.

13. The method of claim 11, wherein the textile product is a knitted/woven fabric, and the weight ratio (a1):(a2) of the repeating unit (a1) to the repeating unit (a2) in the fluorine-containing polymer is 50:50 to 75:25.

14. A treated textile product obtained by treating with the composition of any of claims 1-10.

## Patentansprüche

1. Zusammensetzung, die eine Oberflächenbehandlungszusammensetzung ist, umfassend
(1) ein fluorhaltiges Polymer mit einer von einem fluorhaltigen Monomer (a) abgeleiteten Wiederholungseinheit und eine von einem fluorfreien nicht-vernetzbaren Monomer (b) abgeleiteten Wiederholungseinheit,
das fluorhaltige Monomer (a) umfassend
- ein erstes Monomer (a1) der Formel:
CH₂=C(-Cl)-C(=O)-Y¹-Z¹-Rf¹
worin
Y¹ -O- oder -NH- ist,
Z¹ eine direkte Bindung oder eine zweiwertige organische Gruppe ist und
Rf¹ C₁₋₆-Perfluoralkyl ist, und
- ein zweites Monomer (a2) der Formel:
CH2=C(-X²)-O(=O)-Y²-Z²-Rf²
worin
X² H oder eine einwertige organische Gruppe ist,
Y² -O- oder -NH- ist,
Z² eine direkte Bindung oder eine zweiwertige organische Gruppe ist und
Rf² C₁₋₆-Perfluoralkyl ist,
worin das Gewichtsverhältnis (a1):(a2) der Monomere (a1) und (a2) 20:80 bis 75:25 beträgt; und
das fluorfreie nicht-vernetzbare Monomer (b) umfassend ein Monomer (b1) der Formel CH₂=CA-T, worin A H, Methyl oder Halogen außer F ist und T H, Halogen außer F, eine kettenförmige oder cyclische C₁₋₃₀-Kohlenwasserstoffgruppe oder eine kettenförmige oder cyclische C₁₋₃₀-organische Gruppe mit einer Esterbindung ist;
(2) ein flüssiges wässriges Medium; und
(3) ein Tensid.

2. Zusammensetzung gemäß Anspruch 1, worin X² im Monomer (a2) H ist.

3. Zusammensetzung gemäß Anspruch 1 oder 2, worin, in den Monomeren (a1) und (a2),
Y¹, Y² jeweils -O- sind und
Z¹, Z² jeweils unabhängig eine direkte Bindung, eine C₁₋₁₀-aliphatische Gruppe, eine C₆₋₁₈-aromatische Gruppe, eine C₆₋₁₈-cycloaliphatische Gruppe, -R²(R¹)N-SO₂- oder -R²(R¹)N-CO- (worin R¹ C₁₋₁₀-Alkyl ist und R² lineares oder verzweigtes C₁₋₁₀-Alkylen ist), -CH₂CH(OR³)CH₂-(Ar-O)ₚ- (worin R³ H oder C₁₋₁₀-Acyl ist, Ar Arylen ist und p 0 oder 1 ist), -(CH₂)ᵣ-Ar-(O)_{q}- (worin Ar Arylen ist, q 0 oder 1 ist und r 0-10 ist), oder -(CH₂)ₘ-SO₂-(CH₂)ₙ- oder-(CH₂)ₘ-S-(CH₂)ₙ- (worin m 1-10 ist und n 0-10 ist) sind.

4. Zusammensetzung gemäß einem der Ansprüche 1-3, worin die Menge an organischem Lösungsmittel in dem flüssigen wässrigen Medium ≤ 30 Gew.-% beträgt.

5. Zusammensetzung gemäß einem der Ansprüche 1-3, worin das fluorfreie nicht-vernetzbare Monomer (b) mindestens eines ist aus
(b1-1) einem Acrylatester-Monomer der Formel:
CH₂=CA²¹-C(=O)-O-A²²
worin A²¹ H, Methyl oder Halogen außer F ist und
A²² eine C₁₋₃₀-Kohlenwasserstoffgruppe ist, und
(b1-2) ein halogeniertes C₂₋₂₀-Olefin-Monomer ist, das mit 1-2 Cl-, Br- oder I-Atomen substituiert ist.

6. Zusammensetzung gemäß Anspruch 5, worin A²² im Monomer (b1-1) eine acyclische aliphatische C₁₂₋₃₀-Kohlenwasserstoffgruppe ist.

7. Zusammensetzung gemäß Anspruch 5, worin das halogenierte Olefin-Monomer (b1-2) Vinylchlorid oder Vinylidenchlorid ist.

8. Zusammensetzung gemäß einem der Ansprüche 1-7, worin die Menge an fluorhaltigem Monomer (a) 20-90 Gew.-% beträgt und die Menge an fluorfreiem Monomer (b) 10-80 Gew.-% beträgt, bezogen auf die gesamte Menge an fluorhaltigem Monomer (a) und fluorfreiem Monomer (b).

9. Zusammensetzung gemäß einem der Ansprüche 1-8, die ferner ein Härtungsmittel (4) umfasst, das eine geblockte Polyisocyanatverbindung ist.

10. Zusammensetzung gemäß einem der Ansprüche 1-9, enthaltend
- 0,01-60 Gew.-%, bezogen auf die Zusammensetzung, des fluorhaltigen Polymers (1)
- 30-99,5 Gew.-%, bezogen auf die Zusammensetzung, des flüssigen Mediums (2) und
- 0,1-50 Gewichtsteile, bezogen auf 100 Gewichtsteile des fluorhaltigen Polymers, des Tensids (3).

11. Verfahren zur Herstellung eines behandelten Textilprodukts, umfassend das Anwenden der Zusammensetzung gemäß einem der Ansprüche 1-10 an einem Textilprodukt.

12. Verfahren gemäß Anspruch 11, worin das Textilprodukt ein Vliesstoff ist und das Gewichtsverhältnis (a1):(a2) der Wiederholungseinheit (a1) zur Wiederholungseinheit (a2) in dem fluorhaltigen Polymer 20:80 bis 45:55 beträgt.

13. Verfahren gemäß Anspruch 11, worin das Textilprodukt ein gestrickter/gewebter Stoff ist und das Gewichtsverhältnis (a1):(a2) der Wiederholungseinheit (a1) zur Wiederholungseinheit (a2) in dem fluorhaltigen Polymer 50:50 bis 75:25 beträgt.

14. Behandeltes Textilprodukt, das durch Behandeln mit der Zusammensetzung gemäß einem der Ansprüche 1-10 erhalten ist.

## Revendications

1. Composition qui est une composition de traitement de surface comprenant
(1) un polymère contenant du fluor ayant un motif répété dérivé d'un monomère contenant du fluor (a) et un motif répété dérivé d'un monomère non réticulable sans fluor (b),
le monomère contenant du fluor (a) comprend
- un premier monomère (a1) de formule :
CH₂=C(-C1)-C(=O)-y¹-Z¹-Rf¹
dans laquelle
Y¹ est -O- ou -NH-,
Z¹ est une liaison directe ou un groupe organique divalent, et
Rf¹ est perfluoroalkyle en C₁₋₆, et
- un second monomère (a2) de formule :
CH₂=C(-X²)-C(=O)-y²-Z²-Rf²
dans laquelle
X² est H ou un groupe organique monovalent,
Y² est -O- ou -NH-,
Z² est une liaison directe ou un groupe organique divalent, et
Rf² est perfluoroalkyle en C₁₋₆,
dans laquelle le rapport pondéral (a1):(a2) des monomères (a1) et (a2) est de 20:80 à 75:25 ; et
le monomère non réticulable sans fluor (b) comprend un monomère (b1) de formule CH₂=CA-T
dans laquelle A est H, un méthyle ou un halogène autre que F, et T est H, un halogène autre que F, ou un groupe hydrocarbure en C₁₋₃₀ à chaîne ou cyclique, ou un groupe organique en C₁₋₃₀ à chaîne ou cyclique ayant une liaison ester ;
(2) un milieu aqueux liquide ; et
(3) un tensioactif.

2. Composition selon la revendication 1, dans laquelle X² dans le monomère (a2) est H.

3. Composition selon la revendication 1 ou la revendication 2, dans laquelle dans les monomères (a1) et (a2),
Y¹, Y² sont chacun -O-, et
Z¹, Z² sont chacun indépendamment une liaison directe, un groupe aliphatique en C₁₋₁₀, un groupe aromatique en C₆₋₁₈, un groupe cycloaliphatique en C₆₋₁₈,-R²(R¹)N-SO₂- ou -R²(R¹)N-CO- (dans laquelle R¹ est alkyle en C₁₋₁₀, et R² est alkylène en C₁₋₁₀ linéaire ou ramifié), -CH₂CH(OR³)CH₂-(Ar-0)ₚ- (dans laquelle R³ est H ou acyle en C₁₋₁₀, Ar est arylène, et p vaut 0 ou 1), -(CH₂)ᵣ-Ar-(O)_{q}-(dans laquelle Ar est arylène, q vaut 0 ou 1, et r vaut 0 à 10), ou -(CH₂)ₘ-SO₂-(CH₂)ₙ - ou -(CH₂)ₘ-S-(CH₂)ₙ- (dans laquelle m vaut 1 à 10 et n vaut 0 à 10).

4. Composition selon l'une quelconque des revendications 1 à 3, dans laquelle la quantité de solvant organique dans le milieu aqueux liquide est ≤ 30 % en poids.

5. Composition selon l'une quelconque des revendications 1 à 3, dans laquelle le monomère non réticulable sans fluor (b) est au moins l'un parmi
(b1-1) un monomère d'ester d'acrylate de formule :
CH₂=CA²¹-C(=O)-O-A²²
dans laquelle A²¹ est H, un méthyle ou un halogène autre que F, et A²² est un groupe hydrocarbure en C₁₋₃₀, et
(b1-2) un monomère d'oléfine en C₂₋₂₀ halogéné substitué par 1 à 2 atomes de Cl, Br ou I.

6. Composition selon la revendication 5, dans laquelle A²² dans le monomère (b1-1) est un groupe hydrocarbure aliphatique acyclique en C₁₂₋₃₀.

7. Composition selon la revendication 5, dans laquelle le monomère oléfinique halogéné (b1-2) est du chlorure de vinyle ou du chlorure de vinylidène.

8. Composition selon l'une quelconque des revendications 1 à 7, dans laquelle la quantité de monomère contenant du fluor (a) est de 20 à 90 % en poids, et la quantité de monomère sans fluor (b) est de 10 à 80 % en poids, sur la base de la quantité totale du monomère contenant du fluor (a) et du monomère sans fluor (b).

9. Composition selon l'une quelconque des revendications 1 à 8, qui comprend en outre un agent de durcissement (4) qui est un composé de polyisocyanate bloqué.

10. Composition selon l'une quelconque des revendications 1 à 9, qui contient
- 0,01 à 60 % en poids, sur la base de la composition, du polymère contenant du fluor (1)
- 30 à 99,5 % en poids, sur la base de la composition, du milieu liquide (2), et
- 0,1 à 50 parties en poids, sur la base de 100 parties en poids du polymère contenant du fluor, de tensioactif (3).

11. Procédé de production d'un produit textile traité,
comprenant le fait d'appliquer la composition selon l'une quelconque des revendications 1 à 10 à un produit textile.

12. Procédé selon la revendication 11, dans lequel le produit textile est un tissu non tissé, et le rapport pondéral (a1):(a2) du motif répété (a1) au motif répété (a2) dans le polymère contenant du fluor est de 20:80 à 45:55.

13. Procédé selon la revendication 11, dans lequel le produit textile est un tissu tricoté/tissé, et le rapport pondéral (a1):(a2) du motif répété (a1) au motif répété (a2) dans le polymère contenant du fluor est de 50:50 à 75:25.

14. Produit textile traité obtenu par traitement avec la composition selon l'une quelconque des revendications 1 à 10.
